(19) Europäisches Patentamt
European Patent Office
Office européen des brevets

(11) EP 4 359 458 B1

(12) **EUROPÄISCHE PATENTSCHRIFT**

(45) Veröffentlichungstag und Bekanntmachung des Hinweises auf die Patenterteilung:
**24.09.2025 Patentblatt 2025/39**

(21) Anmeldenummer: **22736233.2**

(22) Anmeldetag: **22.06.2022**

(51) Internationale Patentklassifikation (IPC):
***C08G 18/10*** (2006.01) ***C08G 18/12*** (2006.01)
***C08G 18/24*** (2006.01) ***C08G 18/48*** (2006.01)
***C08G 18/75*** (2006.01) ***C08G 18/76*** (2006.01)
***C08G 18/79*** (2006.01)

(52) Gemeinsame Patentklassifikation (CPC):
(C-Sets verfügbar)
**C08G 18/4825; C08G 18/10; C08G 18/12; C08G 18/246; C08G 18/4812; C08G 18/4829; C08G 18/755; C08G 18/7671; C08G 18/792**
(Forts.)

(86) Internationale Anmeldenummer:
**PCT/EP2022/067047**

(87) Internationale Veröffentlichungsnummer:
**WO 2022/268895 (29.12.2022 Gazette 2022/52)**

(54) **REDUKTION DES GEHALTS AN MONOMEREN POLYISOCYANATEN IN POLYURETHAN-ZUSAMMENSETZUNGEN**

REDUCTION OF THE CONTENT OF MONOMERIC POLYISOCYANATES IN POLYURETHANE COMPOSITIONS

RÉDUCTION DE LA TENEUR EN POLYISOCYANATE MONOMÈRE DANS LES COMPOSITIONS POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2021 EP 21181545**

(43) Veröffentlichungstag der Anmeldung:
**01.05.2024 Patentblatt 2024/18**

(73) Patentinhaber: **Sika Technology AG**
**6340 Baar (CH)**

(72) Erfinder: **REINGARDT, Bernhard**
**8800 Thalwil (CH)**

(74) Vertreter: **Sika Patent Attorneys**
**C/o Sika Technology AG**
**Corp. IP Dept.**
**Tüffenwies 16**
**8048 Zürich (CH)**

(56) Entgegenhaltungen:
**EP-A1- 1 975 186**
**EP-A1- 3 088 435**
**DE-A1- 102011 089 783**
**DE-A1- 19 939 840**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08G 18/10, C08G 18/307;**
**C08G 18/12, C08G 18/307**

## Beschreibung

### Technisches Gebiet

Die Erfindung betrifft ein Verfahren zur Reduktion des Gehalts an monomeren Polyisocyanaten in einer Zusammensetzung enthaltend (i) mindestens ein Prepolymer mit Isocyanat-Endgruppen basierend auf mindestens einem Polyisocyanat und mindestens einem Polyol sowie (ii) wenigstens ein monomeres Polyisocyanat. Des Weiteren betrifft die Erfindung eine Polyurethan-Zusammensetzung sowie ein Verfahren zur Herstellung einer Polyurethanzusammensetzung. Ebenfalls Gegenstand der Erfindung ist die Verwendung eines Hilfsmittels zur Reduktion des Gehalts an monomeren Polyisocyanaten in Polyurethan-Zusammensetzungen.

### Stand der Technik

Polyurethan-Zusammensetzungen sind seit langem bekannt und werden in vielen Bereichen eingesetzt, z.B. als Klebstoffe, Dichtstoffe oder Beschichtungen in der Bau- und Fertigungsindustrie. Es wird zwischen einkomponentigen (1K) und zweikomponentigen (2K) Polyurethan (PUR)-Zusammensetzungen unterschieden. Bei den 1K Polyurethan-Zusammensetzungen, bei denen alle Bestandteile in einer Komponente enthalten sind, kann man ferner unterscheiden zwischen feuchtigkeitshärtenden Zusammensetzungen, die unter Einfluss von Luftfeuchtigkeit aushärten, und hitzehärtenden Zusammensetzungen, bei denen die Aushärtung durch Erwärmung induziert wird.

Polyurethan-Zusammensetzungen enthalten als Bindemittel Polymere mit Isocyanat-Endgruppen, welche durch Umsetzung von Polyolen mit monomeren Polyisocyanaten, typischerweise Diisocyanaten, hergestellt werden.

Die so erhaltenen Polymere werden als Prepolymere bezeichnet und enthalten aufgrund von Kettenverlängerungsreaktionen typischerweise einen Restgehalt an monomeren Polyisocyanaten, typischerweise im Bereich von 1 bis 3 Gewichts-%.

Monomere Polyisocyanate sind potenziell gesundheitsschädlich. Zubereitungen enthaltend monomere Polyisocyanate müssen insbesondere ab einer Konzentration von 0.1 Gewichts-% mit Gefahrensymbolen und Warnhinweisen auf dem Etikett und in den Datenblättern versehen sein und können in einigen Ländern nur unter Auflagen verkauft und eingesetzt werden.

Es gibt verschiedene Ansätze zur Bereitstellung von Isocyanatgruppen-haltigen Polymeren mit geringem Gehalt an monomeren Polyisocyanaten. Ein Weg besteht darin, das monomere Polyisocyanat bei der Polymerherstellung im Unterschuss einzusetzen. Dabei entstehen aber stark kettenverlängerte Polymere mit sehr hoher Viskosität, die zu Problemen bei der Lagerstabilität und der Verarbeitbarkeit der Produkte führen. Ein weiterer Weg besteht darin, das Isocyanatgruppen-haltige Polymer teilweise mit einer funktionellen Verbindung, beispielsweise einem Mercaptosilan, Aminosilan oder Hydroxyaldimin, umzusetzen. Die erhaltenen Umsetzungsprodukte weisen aber eine andere Vernetzungscharakteristik sowie ebenfalls eine stark erhöhte Viskosität auf und sind nur eingeschränkt lagerstabil und verarbeitbar.

In EP 2,439,219 wird die Verwendung von an der Oberfläche Aminogruppen aufweisendem Siliciumdioxid zur Reduktion des Gehalts an monomeren Diisocyanaten beschrieben. Das spezielle Siliciumdioxid ist aber teuer und führt ebenfalls zu hohen Viskositäten.

EP 1,975,186 lehrt ein Verfahren zur Verminderung des Gehalts an monomeren Diisocyanaten in Zusammensetzungen enthaltend Isocyanatgruppen aufweisende Polyurethanpolymere, insbesondere verwendet als Heisschmelzklebstoffe, wobei spezielle Polyaldimine und Wasser in der Zusammensetzung mit den vorhandenen monomeren Diisocyanaten selektiv reagieren. Dieses Verfahren setzt jedoch den Einsatz kostspieliger, spezieller Aldimin-Additive voraus, welche zudem mit den Polyurethanpolymeren unter Hydrolyse reagieren können und damit die Formulierungs- und Anwendungsfreiheit der Zusammensetzung einschränken.

Der in Bezug auf die Produkteigenschaften attraktivste Weg zu Isocyanatgruppen-haltigen Polymeren mit niedrigem Gehalt an monomeren Polyisocyanaten besteht darin, das monomere Polyisocyanat bei der Polymerherstellung im Überschuss einzusetzen und anschliessend den Grossteil des nicht umgesetzten monomeren Polyisocyanats mittels eines geeigneten Trennverfahrens, insbesondere mittels Destillation, zu entfernen. Polymere aus diesem Verfahren weisen eine vergleichsweise niedrige Viskosität und einen geringen Restgehalt an monomeren Polyisocyanat auf und eignen sich hervorragend zur Herstellung von monomerarmen Polyurethan-Zusammensetzungen, welche eine gute Lagerstabilität und gute Applikationseigenschaften aufweisen. Nachteilig ist bei diesem Ansatz aber insbesondere, dass aufwändige Trennverfahren durchgeführt werden müssen, welche zusätzliche Apparaturen benötigen und die Herstellung der Polymere verteuern.

Es besteht daher nach wie vor Bedarf nach verbesserten Lösungen, welche die genannten Nachteile nicht oder in geringerem Masse aufweisen.

## Darstellung der Erfindung

Aufgabe der Erfindung ist es daher, verbesserte Lösungen zur Herstellung von Isocyanatgruppen-haltigen Polymeren mit niedrigem Gehalt an monomeren Polyisocyanaten bereitzustellen. Die Lösungen sollen möglichst effizient, kostengünstig und mit geringem apparativem Aufwand umsetzbar sein. Zugleich sollen Polyurethan-Zusammensetzungen erhältlich sein, welche möglichst gute Eigenschaften aufweisen, insbesondere in Bezug auf Lagerstabilität, Verarbeitbarkeit, Aushärtbarkeit und mechanische Eigenschaften.

Es wurde überraschenderweise festgestellt, dass die Aufgabe durch das Verfahren gemäss Anspruch 1 gelöst werden kann. Kern der Erfindung ist demnach ein Verfahren zur Reduktion des Gehalts an monomeren Polyisocyanaten in einer Zusammensetzung enthaltend (i) mindestens ein Prepolymer mit Isocyanat-Endgruppen basierend auf mindestens einem Polyisocyanat und mindestens einem Polyol sowie (ii) wenigstens ein monomeres Polyisocyanat, wobei das Verfahren die folgenden Schritte umfasst:

a) Bereitstellen der Zusammensetzung enthaltend das Prepolymer und das wenigstens eine monomere Isocyanat;

b) Umsetzen der Zusammensetzung mit einem Polycarboxylat und Wasser bei einer Temperatur von mindestens 40°C, bevorzugt 50 - 90°C, im Besonderen 60 - 80°C, besonders bevorzugt 65 - 75°C, so dass der Gehalt an monomerem Polyisocyanat in der Zusammensetzung reduziert wird,

dadurch gekennzeichnet, dass
das Polycarboxylat ein Polycarboxylatether ist, bevorzugt ein Kammpolymer, welches über ein Polycarboxylatrückgrat und Polyetherseitenketten verfügt, wobei die Polyetherseitenketten über Ester-, Ether-, Amid- und/oder Imidgruppen an das Polycarboxylatrückgrat gebunden sind.

Es hat sich gezeigt, dass durch die Umsetzung mit Wasser und Polycarboxylat der Gehalt an monomerem Polyisocyanat gezielt reduziert werden kann, wobei es problemlos möglich ist, den Gehalt an monomerem Polyisocyanat auf unter 0.1 Gew.-% zu senken.

Die erfindungsgemäss erhältlichen Zusammensetzungen mit reduziertem Gehalt an monomeren Polyisocyanaten können zudem als Basis für 1K Polyurethan-Zusammensetzungen verwendet werden, ohne dass sich signifikante Beeinträchtigungen in Bezug auf die Lagerstabilität, Verarbeitbarkeit, Aushärtbarkeit und die mechanischen Eigenschaften der 1K Polyurethan-Zusammensetzungen ergeben.

Das Verfahren lässt sich des Weiteren vollständig in Apparaturen durchführen, welche typischerweise für die Herstellung von Prepolymeren eingesetzt werden. Entsprechend können der apparative Aufwand und die Kosten reduziert werden. Ebenfalls vorteilhaft ist es, dass Schritt b) des erfindungsgemässen Verfahrens, falls erwünscht, direkt anschliessend an die Herstellung des Prepolymers erfolgen kann, ohne dass die Reaktionsmischung abgekühlt werden muss, was zusätzlich Energie spart.

Weitere Aspekte der Erfindung sind Gegenstand weiterer unabhängiger Ansprüche. Besonders bevorzugte Ausführungsformen der Erfindung sind Gegenstand der abhängigen Ansprüche

## Weg zur Ausführung der Erfindung

Ein erster Aspekt der vorliegenden Erfindung betrifft ein Verfahren zur Reduktion des Gehalts an monomeren Polyisocyanaten in einer Zusammensetzung enthaltend (i) mindestens ein Prepolymer mit Isocyanat-Endgruppen basierend auf mindestens einem Polyisocyanat und mindestens einem Polyol sowie (ii) wenigstens ein monomeres Polyisocyanat, wobei das Verfahren die folgenden Schritte umfasst:

a) Bereitstellen der Zusammensetzung enthaltend das Prepolymer und das wenigstens eine monomere Polyisocyanat;

b) Umsetzen der Zusammensetzung mit einem Polycarboxylat und Wasser bei einer Temperatur von mindestens 40°C, bevorzugt 50 - 90°C, im Besonderen 60 - 80°C, besonders bevorzugt 65 - 75°C, so dass der Gehalt an monomerem Polyisocyanat in der Zusammensetzung reduziert wird,

dadurch gekennzeichnet, dass das Polycarboxylat ein Polycarboxylatether ist, bevorzugt ein Kammpolymer, welches über ein Polycarboxylatrückgrat und Polyetherseitenketten verfügt, wobei die Polyetherseitenketten über Ester-, Ether-, Amid- und/oder Imidgruppen an das Polycarboxylatrückgrat gebunden sind.

Mit "Poly" beginnende Verbindungsnamen bezeichnen Substanzen, die zwei oder mehr der in ihrem Namen vorkommenden funktionellen Gruppen pro Molekül enthalten. Bei den Verbindungen kann es sich um monomere, oligomere oder polymere Verbindungen handeln. Ein Polyol ist z.B. eine Verbindung mit zwei oder mehr Hydroxylgruppen.

Ein Polyisocyanat ist eine Verbindung mit zwei oder mehr Isocyanatgruppen.

Isocyanat-reaktive Verbindungen sind Verbindungen, die mindestens eine Isocyanat-reaktive Gruppe aufweisen, die mit Isocyanatgruppen unter Bildung einer chemischen Bindung reagieren kann.

Eine einkomponentige Polyurethan-Zusammensetzung bedeutet eine Zusammensetzung, bei der die Bestandteile in einer Komponente vorliegen. In der Regel ist eine einkomponentige Zusammensetzung bei Raumtemperatur (z.B. 23°C) und, wenn ein feuchtigkeitshärtbares System vorliegt, bei Ausschluss von Luftfeuchtigkeit zumindest über eine gewisse Zeit lagerstabil.

Der Begriff "lagerstabil" bezeichnet die Eigenschaft einer Substanz oder einer Zusammensetzung, dass sie bei Raumtemperatur in einem geeigneten Gebinde während mehreren Wochen bis 6 Monate und mehr aufbewahrt werden kann, ohne dass sie sich in ihren Anwendungs- oder Gebrauchseigenschaften durch die Lagerung in einem für ihren Gebrauch relevanten Ausmass verändert.

Das mittlere Molekulargewicht bedeutet hier das Zahlenmittel des Molekulargewichts ($M_n$), welches durch Gelpermeationschromatographie (GPC) gegen Polystyrol-Standard ermittelt werden kann.

Alle folgenden Angaben, insbesondere zum Verfahren, zur Polyurethan-Zusammensetzung und zu den Verwendungen, gelten naturgemäss für das erfindungsgemässe Verfahren, die erfindungsgemässen Verwendungen und die daraus erhältlichen Polyurethan-Zusammensetzungen gleichermassen, auch wenn darauf nicht eigens hingewiesen wird.

Unter Hitzehärtung wird die Härtung bei einer erhöhten Temperatur von z.B. mindestens 80°C, insbesondere mindestens 100°C, im Speziellen mehr als 120°C verstanden. Die Hitzehärtung wird insbesondere bei einer Temperatur oberhalb des Schmelzpunkts der Stickstoffverbindung durchgeführt.

Bei der Hitzehärtung wird die Polyurethan-Zusammensetzung nach der Applikation gleichzeitig überall gehärtet. Dagegen erfolgt bei der Feuchtigkeitshärtung eine diffusionsgesteuerte Härtung der Polyurethan-Zusammensetzung nach der Applikation von außen nach innen. Unter Feuchtigkeitshärtung wird die Härtung unter Feuchtigkeit, insbesondere Luftfeuchtigkeit, verstanden. Die Feuchtigkeitshärtung wird in der Regel bei einer Temperatur von nicht mehr als 40°C durchgeführt, wobei die Feuchtigkeitshärtung gewöhnlich bei Raumtemperatur durchgeführt wird, also z.B. bei Temperaturen unter 35°C, z.B. bei etwa 23°C.

Die in Schritt a) erfindungsgemäss verwendete Zusammensetzung umfasst mindestens ein Prepolymer mit Isocyanat-Endgruppen aus mindestens einem Polyisocyanat und mindestens einem Polyol. Es können auch Mischungen von zwei oder mehr solcher Prepolymere vorliegen. Prepolymere mit Isocyanat-Endgruppen sind dem Fachmann bekannt. Das Prepolymer weist mindestens zwei Isocyanat-Endgruppen und vorzugsweise genau zwei Isocyanat-Endgruppen auf. Über die Isocyanat-Endgruppen kann das Prepolymer durch Reaktion mit Verbindungen, die Isocyanat-reaktive Gruppen, wie z.B. Wasser, Hydroxylgruppen oder Amingruppen, aufweisen, kettenverlängert bzw. vernetzt werden, was die Härtung der Zusammensetzung bewirkt. Die Ausdrücke "Härtung" oder "Vernetzung" schliessen hier im Folgenden auch Kettenverlängerungsreaktionen ein.

Bei dem Prepolymer mit Isocyanat-Endgruppen aus mindestens einem Polyisocyanat und mindestens einem Polyol handelt es sich um ein Polyurethan-Prepolymer, das durch Umsetzung von mindestens einem Polyisocyanat und mindestens einem Polyol hergestellt wird. Der Fachmann kann solche Prepolymere ohne weiteres herstellen.

Ebenfalls Bestandteil der erfindungsgemäss bereitgestellten Zusammensetzung ist wenigstens ein monomeres Polyisocyanat. Dieses entspricht insbesondere dem wenigstens einen Polyisocyanat, auf welchem das Prepolymer basiert oder welches zur Herstellung des Prepolymers eingesetzt wird. Prinzipiell können aber alternativ oder zusätzlich auch andere monomere Polyisocyanate vorliegen.

Ein Gehalt an monomerem Polyisocyanat in der in Schritt a) bereitgestellten Zusammensetzung beträgt im Besonderen mehr als 0.5 Gew.-%, insbesondere mehr als 1 Gew.-%, im Speziellen mehr als 2 Gew.-%, bezogen auf die Zusammensetzung. Insbesondere beträgt der Anteil der in Schritt a) bereitgestellten Zusammensetzung 0.6 - 15 Gew.-%, im Speziellen 1 - 10 Gew.-%, im Besonderen 2 - 5 Gew.-% bezogen auf die Zusammensetzung. Die ebengenanne Zusammensetzung kann dabei vorwiegend oder ausschliesslich aus Prepolymer und monomerem Polyisocyanat bestehen.

In Schritt a) kann eine bereits vorgängig hergestellte Zusammensetzung enthaltend das Prepolymer und das wenigstens eine monomere Polyisocyanat bereitgestellt werden oder die Zusammensetzung enthaltend das Prepolymer und das wenigstens eine monomere Polyisocyanat kann in Schritt a) durch Umsetzung mindestens eines Polyols mit mindestens einem Polyisocyanat hergestellt werden, wobei Reste des monomeren Polyisocyanats unreagiert in der Reaktionsmischung verbleiben. Gemäss einer vorteilhaften Ausführungsform werden in Schritt a) zur Bereitstellung der Zusammensetzung mindestens ein Polyisocyanat und mindestens ein Polyol zu dem Prepolymer mit Isocyanat-Endgruppen umgesetzt. Aufgrund der nie ganz vollständigen Umsetzung beinhaltet die Zusammensetzung stets einen gewissen Gehalt an monomerem Polyisocyanat.

Die Umsetzung des mindestens einen Polyols mit mindestens einem Polyisocyanat kann z.B. dadurch erfolgen, dass die Polyol-Komponente und die Polyisocyanat-Komponente mit üblichen Verfahren, z.B. bei Temperaturen von 50 bis 100 °C, gegebenenfalls unter Anwesenheit eines geeigneten Katalysators, zur Reaktion gebracht werden, wobei das

Polyisocyanat im stöchiometrischen Überschuss eingesetzt wird. Zur Reaktionsmischung können gegebenenfalls nach Bedarf Zusatzstoffe wie Lösemittel und/oder Weichmacher zugesetzt werden. Als Reaktionsprodukt entsteht das Prepolymer mit Isocyanat-Endgruppen. Lösemittel, falls eingesetzt, können nach der Umsetzung wieder entfernt werden. Weichmacher, sofern eingesetzt, können vorzugsweise im erhaltenen Produkt verbleiben.

Bei dem Polyisocyanat zur Bildung des Prepolymers mit Isocyanat-Endgruppen handelt es sich bevorzugt um ein Polyisocyanat, insbesondere ein Diisocyanat, das aus aliphatischen Polyisocyanaten und/oder aromatischen Polyisocyanaten ausgewählt ist. Es können ein solches Polyisocyanat oder zwei oder mehr solche Polyisocyanate eingesetzt werden. Bevorzugt ist ein aromatisches Polyisocanat oder ein aliphatisches Polyisocyanat oder eine Mischung aus mindestens einem aliphatischen und mindestens einem aromatischen Polyisocyanat.

Ein aliphatisches Polyisocyanat ist eine aliphatische Verbindung, die mindestens zwei Isocyanatgruppen aufweist. Bevorzugt ist ein aliphatisches Diisocyanat. Es kann sich um ein acyclisches oder cyclisches aliphatisches Polyisocyanat handeln, wobei ein cyclisches aliphatisches Polyisocyanat bevorzugt ist. Vorzugsweise handelt es sich um ein gesättigtes aliphatisches Polyisocyanat. Diese Polyisocyanate sind bekannt und im Handel erhältlich.

Beispiele für ein geeignetes aliphatisches Polyisocyanat sind 1,6-Hexamethylendiisocyanat, 2,2,4- und 2,4,4-Trimethyl-1,6-hexamethylendiisocyanat, 1,12-Dodecamethylendiisocyanat, Cyclobutan-1,3-diisocyanat, Cyclohexan-1,3- und 1,4-diisocyanat und Mischungen dieser Isomere, Isophorondiisocyanat (IPDI, 1-Isocyanato-3,3,5-trimethyl-5-isocyanatomethyl-cyclohexan), 2,4- und 2,6-Hexahydrotoluylendiisocyanat, Hexahydro-1,3- und -1,4-phenyl-diisocyanat, Perhydro-2,4'- und -4,4'-diphenylmethandiisocyanat, und Mischungen der vorgenannten Isocyanate. Besonders bevorzugt ist Isophorondiisocyanat (IPDI) und Hexamethylen-1,6-diisocyanat (HDI).

Beispiele für ein geeignetes aromatisches Polyisocyanat sind 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), 1,4-Phenylendiisocyanat (PDI), und/oder Naphthalin-1,5-diisocyanat (NDI).

Besonders bevorzugt umfasst das Polyisocyanat ein Diphenylmethandiisocyanat, bevorzugt ein 4,4'-Diphenylmethandiisocyanat, gegebenenfalls mit Anteilen von 2,4'- und/oder 2,2'-Diphenylmethandiisocyanat (MDI). Derartige monomere Polyisocyanate lassen sich mit dem erfindungsgemässen Verfahren besonders effektiv reduzieren.

Zur Bildung des Prepolymers mit Isocyanat-Endgruppen wird das mindestens eine Polyisocyanat mit einem oder mehreren Polyolen umgesetzt. Es können alle Polyole eingesetzt werden, die für die Polyurethanchemie üblich sind. Geeignete Polyole sind in grosser Vielfalt im Handel erhältlich.

Das Polyol weist bevorzugt ein zahlenmittleres Molekulargewicht bzw., sofern es sich um ein nicht polymeres Polyol handelt, ein Molekulargewicht, von 250 bis 30.000 g/mol und bevorzugt von 400 bis 20.000 g/mol auf.

Das Polyol weist ferner bevorzugt eine mittlere OH-Funktionalität im Bereich von 1.6 bis 3 auf. Es versteht sich, dass polymere Verbindungen auch aus Nebenreaktionen gebildete Substanzen enthalten können, die z.B. nur eine oder keine Hydroxygruppe aufweisen.

Bevorzugt ist das Polyol ein Diol oder Triol mit einer OH-Zahl im Bereich von 8 bis 185 mg KOH/g, insbesondere im Bereich von 10 bis 120 mg KOH/g.

Als Polyole können beispielsweise die folgenden handelsüblichen Polyole oder Mischungen davon eingesetzt werden:

a) Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, z.B. hergestellt mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxyethylen- und Polyoxypropylendi- und -triole. Speziell geeignet sind Polyoxyalkylendiole und -triole mit einem Ungesättigtheitsgrad kleiner als 0,02 mEq/g und mit einem mittleren Molekulargewicht im Bereich von 1.000 bis 30.000 g/mol, sowie Polyoxypropylendiole und -triole mit einem mittleren Molekulargewicht von 400 bis 8.000 g/mol.

Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.

b) Styrol-Acrylnitril- oder Acrylnitril-Methylmethacrylat-gepfropfte Polyetherpolyole.

c) Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

d) Polycarbonatpolyole, wie sie z.B. durch Umsetzung der oben genannten - zum Aufbau der Polyesterpolyole eingesetzten - Alkohole mit Dialkylcarbonaten, Diarylcarbonaten oder Phosgen zugänglich sind.

e) Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.

f) Polyacrylat- und Polymethacrylatpolyole.

g) Polyhydroxyfunktionelle Fette und Öle, beispielsweise natürliche Fette und Öle, insbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschließender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschließender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

h) Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren hergestellt werden können; sowie hydrierte polyhydroxyfunktionelle Polymere oder Copolymere von Dienen.

Bei der Herstellung des Prepolymers reagieren die OH-Gruppen des Polyols mit den Isocyanatgruppen des monomeren Polyisocyanats, insbesondere des monomeren Diisocyanats. Dabei kommt es auch zu sogenannten Kettenverlängerungsreaktionen, indem OH-Gruppen und/oder Isocyanatgruppen von Umsetzungsprodukten zwischen Polyol und monomerem Polyisocyanat reagieren. Je höher das NCO/OH-Verhältnis gewählt wird, desto weniger Kettenverlängerungsreaktionen finden statt, und desto niedriger ist die Polydispersität und somit die Viskosität des erhaltenen Polymers. Ein Mass für die Kettenverlängerungsreaktion ist das mittlere Molekulargewicht des Polymers bzw. die Breite

und Verteilung der Peaks in der GPC-Analyse. Ein weiteres Mass ist der effektive NCO-Gehalt des Monomer-befreiten Polymers im Verhältnis zum theoretischen NCO-Gehalt berechnet aus der Umsetzung jeder OH-Gruppe mit einem monomeren Polyisocyanat.

Bevorzugt liegt das NCO/OH-Verhältnis bei der Umsetzung zwischen Polyisocyanat und dem Polyol im Bereich von 1.3/1 bis 10/1, besonders bevorzugt im Bereich von 1.3/1 bis 2.5/1.

Der Restgehalt an unreagiertem Polyisocyanat nach der Reaktion liegt bevorzugt bei höchstens 3 Gew.-%, insbesondere höchstens 2 Gew.-%, bezogen auf das gesamte Umsetzungsprodukt.

Bevorzugt hat das Prepolymer einen NCO-Gehalt im Bereich von 0.5 bis 10 Gewichts-%, bevorzugt 0.6 bis 8.4 Gewichts-%, insbesondere 0.8 bis 7 Gewichts-%, bezogen auf das Prepolymer.

Solche Prepolymere sind besonders geeignet für die Herstellung von Zubereitungen, wie insbesondere elastische Klebstoffe, Dichtstoffe und Beschichtungen, welche, nach Umsetzung mittels Schritt b) des erfindungsgemässen Verfahrens, einen Gehalt an monomeren Polyisocyanaten, insbesondere monomeren Diisocyanaten, von weniger als 0.1 Gewichts-% aufweisen; diese sind auch ohne besondere Schutzvorkehrungen sicher in der Handhabung und können damit in vielen Ländern ohne Gefahrenkennzeichnung verkauft werden.

Die Reaktion zwischen dem Polyisocyanat und dem Polyol zur Herstellung des Prepolymers wird bevorzugt unter Feuchtigkeitsausschluss bei einer Temperatur im Bereich von 20 bis 160 °C, insbesondere 40 bis 140 °C, durchgeführt, gegebenenfalls in Anwesenheit geeigneter Katalysatoren.

Die Umsetzung in Schritt b) wird derart durchgeführt, dass der Gehalt an monomerem Polyisocyanat in der Zusammensetzung reduziert wird. Dies gelingt insbesondere gut, wenn das Polycarboxylat erst dann zum Restmonomer enthaltenden Prepolymer hinzugefügt wird, wenn das Prepolymer bereits auf Reaktionstemperatur von mindestens 40 °C erwärmt wurde.

Insbesondere wird die Umsetzung in Schritt b) derart durchgeführt, dass bezogen auf den vor Schritt b) vorliegenden Gehalt an monomerem Polyisocyanat, im Speziellen von monomeren Dissiocyanaten, eine Abnahme des Gehalts an monomerem Polyisocyanat von wenigstens 10 Gew.-%, insbesondere wenigstens 50 Gew.-%, im Speziellen wenigstens 75 Gew.-%, im Besonderen wenigstens 90 Gew.-% oder wenigstens 95 Gew.-%, erreicht wird.

Bevorzugt wird die Umsetzung in Schritt b) derart durchgeführt, dass ein Gehalt an monomeren Polyisocyanaten, im Speziellen monomeren Dissiocyanaten, von höchstens 0.5 Gewichts-%, bevorzugt höchstens 0.3 Gewichts-%, insbesondere höchstens 0.1 Gewichts-%, im Speziellen weniger als 0.1 Gewichts-%, bezogen auf die Zusammensetzung resultiert.

Es hat sich als zweckmässig erweisen, wenn die Zusammensetzung in Schritt b) während mindestens 5 min, bevorzugt 10 - 120 min, im Besonderen 15 - 60 min, bei Reaktionstemperatur umgesetzt wird. Dies führt zu einer signifikanten Reduktion des Gehalts an monomerem Polyisocyanat.

Vorteilhaft ist es, wenn das Polycarboxylat und das Wasser in Schritt b) mit der Zusammensetzung vermischt werden und bevorzugt die Mischung während der Umsetzung zeitweise oder durchgehend gemischt wird. Dadurch kann die Umsetzung beschleunigt werden. Als Mischvorrichtungen können vorliegend alle auf diesem Gebiet bekannten Mischvorrichtungen eingesetzt werden.

Das Polycarboxylat und das Wasser können gleichzeitig, beispielsweise als Mischung, oder sequenziell zugegeben werden. Dabei ist es vorteilhaft, wenn das Polycarboxylat bei der Zugabe von Wasser bereits anwesend ist oder gleichzeitig zugegeben wird. In einer bevorzugten Ausführungsform wird das Polycarboxylat vorgängig mit Wasser versetzt, beispielsweise durch Besprühen, und dann als Polycarboxylat/Wasser-Mischung in Schritt b) zugegeben. In einer weiteren bevorzugten Ausführungsform wird das Polycarboxylat zunächst zugegeben und bevorzugt in der Mischung eingemischt, und das Wasser anschliessend zudosiert.

Im Besonderen wird das erfindungsgemässe Verfahren ohne einen Trennschritt zur Abtrennung von monomerem Polyisocyanat durchgeführt, insbesondere ohne destillative Abtrennung von monomerem Polyisocyanat. In speziellen Varianten ist es aber grundsätzlich möglich, einen Teil des monomeren Polyisocyanats, mittels eines geeigneten Trennverfahrens zu entfernen. Als Trennverfahren bevorzugt ist ein destillatives Verfahren, insbesondere Dünnschichtdestillation oder Kurzwegdestillation, bevorzugt unter Anlegen von Vakuum.

Das Polycarboxylat ist ein Polycarboxylatether. Weiter bevorzugt handelt es sich beim Polycarboxylat um ein Kammpolymer, welches über ein Polycarboxylatrückgrat und Polyetherseitenketten verfügt, wobei die Polyetherseitenketten über Ester-, Ether-, Amid- und/oder Imidgruppen an das Polycarboxylatrückgrat gebunden sind.

Besonders bevorzugt ist das Polycarboxylat ein Polymer **P,** welches folgende Teilstruktureinheiten aufweist oder daraus besteht:

a) a Molanteile einer Teilstruktureinheit **S1** der Formel I

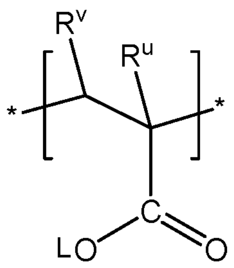

(I)

b) b Molanteile einer Teilstruktureinheit **S2** der Formel II

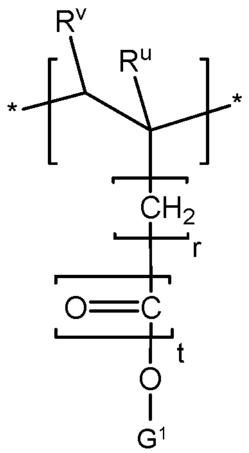

(II)

c) c Molanteile einer Teilstruktureinheit **S3** der Formel (III)

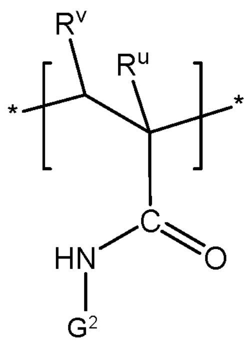

(III)

d) d Molanteile einer Teilstruktureinheit **S4** der Formel (IV)

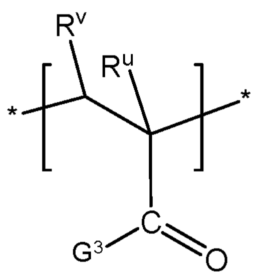

(IV)

wobei

L unabhängig voneinander $H^+$, ein Alkalimetallion, Erdalkalimetallion, ein zwei- oder dreiwertiges Metallion, ein Ammoniumion oder eine organische Ammoniumgruppe darstellt,
jedes $R^u$ unabhängig von den anderen für Wasserstoff oder eine Methylgruppe steht,
jedes $R^v$ unabhängig von den anderen für Wasserstoff oder COOM steht,

$$r = 0, 1 \text{ oder } 2,$$

$$t = 0 \text{ oder } 1,$$

$G^1$ und $G^2$ unabhängig voneinander für eine $C_1$- bis $C_{20}$-Alkylgruppe, -Cycloalkylgruppe, -Alkylarylgruppe oder für $-[A'O]_s-G^4$ steht, wobei A' = $C_2$- bis $C_4$-Alkylen, $G^4$ für H, eine $C_1$- bis $C_{20}$-Alkylgruppe, -Cycloalkylgruppe oder -Alkylarylgruppe steht, und s = 2 - 250,
$G^3$ unabhängig voneinander für $NH_2$, $-NG^5G^6$, $-OG^7NG^8G^9$ stehen, wobei $G^5$ und $G^6$ unabhängig voneinander für

eine $C_1$- bis $C_{20}$-Alkylgruppe, -Cycloalkylgruppe -Alkylarylgruppe oder -Arylgruppe stehen,
oder für eine Hydroxyalkylgruppe oder für eine Acetoxyethyl- ($CH_3$-CO-O-$CH_2$-$CH_2$-) oder eine Hydroxyisopropyl- (HO-CH($CH_3$)-$CH_2$-) oder eine Acetoxyisopropylgruppe ($CH_3$-CO-O-CH($CH_3$)-$CH_2$-) stehen;

oder $G^5$ und $G^6$ bilden zusammen einen Ring, von dem der Stickstoff ein Teil ist, um einen Morpholin- oder Imidazolinring aufzubauen;
$G^7$ eine $C_2$ -$C_4$-Alkylengruppe ist,
$G^8$ und $G^9$ je unabhängig voneinander eine $C_1$- bis $C_{20}$-Alkylgruppe, -Cycloalkylgruppe, -Alkylarygruppe, -Arylgruppe oder eine Hydroxyalkylgruppe darstellen,

und wobei a, b, c und d Molanteile der jeweiligen Teilstruktureinheiten **S1, S2, S3** und **S4** darstellen, mit

$$a/b/c/d = (0.1 – 0.9) / (0.1 – 0.9) / (0 – 0.8) / (0 – 0.8),$$

insbesondere

$$a/b/c/d = (0.3 – 0.9) / (0.1 – 0.7) / (0 – 0.6) / (0 – 0.4),$$

bevorzugt

$$a/b/c/d = (0.5 – 0.8) / (0.2 – 0.4) / (0.001 – 0.005) / 0$$

und mit der Massgabe dass

$$a + b + c + d = 1 \text{ ist.}$$

Die Abfolge der Teilstruktureinheiten **S1, S2, S3** und **S4** kann alternierend, blockartig oder zufällig sein. Auch möglich ist es, dass die eine oder mehrere der Teilstruktureinheiten **S1, S2, S3** und **S4** eine Gradientenstruktur ausbilden. Prinzipiell ist es auch möglich, dass zusätzlich zu den Teilstruktureinheiten **S1, S2, S3** und **S4** weitere Struktureinheiten vorliegen. Im Besonderen sind die Abfolgen der Teilstruktureinheiten **S1, S2, S3** und **S4** im Polymer P zufällig oder statistisch.

Bevorzugt weisen die Teilstruktureinheiten **S1, S2, S3,** und **S4** zusammen einen Gewichtsanteil von wenigstens 50 Gew.-%, insbesondere wenigstens 90 Gew.-%, ganz besonders bevorzugt wenigstens 95 Gew.-%, am Gesamtgewicht des Polymers **P** auf.

Die Herstellung der Polymere **P** ist dem Fachmann an sich bekannt und kann beispielsweise durch radikalische Polymerisation der entsprechenden Monomere der Formel ($I_m$), ($II_m$), ($III_m$) bzw. ($IV_m$) erfolgen, was zu einem Polymer **P** mit den Teilstruktureinheiten **S1, S2, S3** und **S4** führt. Die Reste $R^u$, $R^v$, $G^1$, $G^2$, $G^3$, L, r und t sind dabei wie vorstehend im Zusammenhang mit dem Polymer **P** beschreiben definiert.

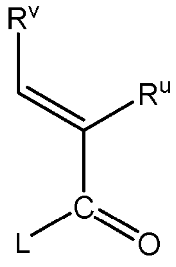
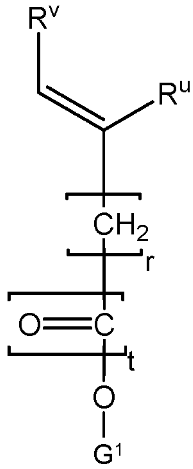
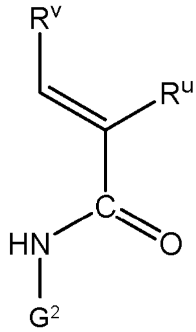
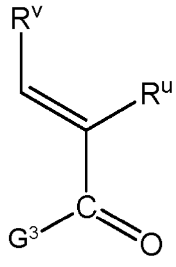

(Im) (IIm) (IIIm) (IVm)

Ebenfalls möglich ist die Herstellung der Polymere **P** durch polymer-analoge Umsetzung einer Polycarbonsäure der Formel (V).

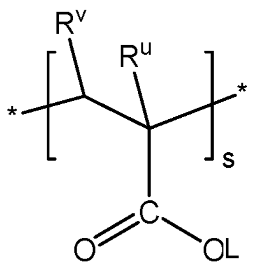

(V).

Bei der polymer-analogen Umsetzung wird die Polycarbonsäure der Formel (V) mit den korrespondierenden Alkoholen oder Aminen (z.B. HO-$G^1$, $H_2N$-$G^2$, H-$G^3$) verestert bzw. amidiert und dann allenfalls neutralisiert oder teilneutralisiert (je nach Art des Rests L z.B. mit Metallhydroxiden oder Ammoniak). Die Reste L und der Parameter s ist dabei wie vorstehend im Zusammenhang mit dem Polymer **P** beschreiben definiert. Details zur polymer-analogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen den Beispielen. In einer Abart davon, wie sie in EP 1 348 729 A1 auf Seite 3 bis Seite 5 sowie in dessen Beispielen beschrieben sind, kann das Polymer in festem Aggregatszustand hergestellt werden.

Im Polymer **P** stellt $R^v$ insbesondere Wasserstoff dar und $R^u$ steht bevorzugt für Wasserstoff und/oder eine Methylgruppe.

Bevorzugt ist im Polymer **P** r = 0 und t = 1. Auch vorteilhaft ist r = 1 - 2 und t = 0.

$G^1$ und/oder $G^2$ im Polymer **P** stehen, jeweils unabhängig voneinander, mit Vorteil für -[A'O]$_s$-$G^4$ mit s = 8 - 200, insbesondere 20 - 150, im Speziellen 50 - 130, beispielsweise 80 - 120, und A' für ein $C_2$- bis $C_4$-Alkylen.

Im Polymer **P** steht $G^4$, jeweils unabhängig voneinander, bevorzugt für Wasserstoff oder für eine Methylgruppe.

Ganz besonders vorteilhaft sind Polymere **P** wobei

a) die Reste $R^u$ und $R^v$ für Wasserstoff stehen,

b)

$$r = 0$$

ist,

c)

$$t = 1$$

ist,

d) $G^1$ und $G^2$, jeweils unabhängig voneinander, für $-[A'O]_s-G^4$ mit s = 8 - 200, insbesondere 20 - 120 und A' = $C_2$-Alkylen steht,
e) $G^4$ eine Methylgruppe darstellt und/oder
f)

$$a/b/c/d = (0.5 – 0.8) / (0.2 – 0.4) / (0.001 – 0.005) / 0$$

Dabei sind bevorzugt die Merkmale a) - e) in Kombination erfüllt, im Speziellen zusätzlich auch Merkmal f). Ein solches Polymer **P,** welches die ebengenannten Merkmale a) - e) in Kombination erfüllt, ist beispielsweise ViscoCrete®-520 P, erhältlich von Sika Schweiz.

Ebenfalls vorteilhaft sind Polymere **P** wobei

a)

$$t = 0 \text{ und } r = 1 – 2,$$

b) $G^1$, jeweils unabhängig voneinander, für $-[A'O]_s-G^4$ mit s = 8 - 200, insbesondere 20 - 120, steht,
c) $G^4$ Wasserstoff oder eine Methylgruppe darstellt, insbesondere Wasserstoff, und/oder
d) A' für ein $C_2$- bis $C_4$-Alkylen, insbesondere ein $C_2$-Alkylen, steht.

Dabei sind bevorzugt die Merkmale a) - d) in Kombination erfüllt.

Ein gewichtsgemitteltes Molekulargewicht ($M_W$) des Polycarboxylates, insbesondere des Polymers **P,** beträgt insbesondere 5'000 - 150'000 g/mol, bevorzugt 10'000 - 100'000 g/mol, speziell 20'000 - 90'000 g/mol. Das gewichtsgemittelte Molekulargewicht ($M_W$) wird durch Gelpermeationschromatographie (GPC) bestimmt, wobei Polyethylenglycol (PEG) als Standard verwendet wird.

Das Polycarboxylat, insbesondere das Polymer **P,** wird bevorzugt in fester Form, im Speziellen in Pulverform eingesetzt.

Entsprechende Polymere **P** werden auch von der Sika Schweiz AG unter der Handelsnamenreihe ViscoCrete® kommerziell vertrieben.

Bevorzugt wird das Polycarboxylat mit einem Anteil von 0.5 - 20 Gew.-%, bevorzugt 1 - 15 Gew.-%, insbesondere 2 - 12 Gew-%, bezogen auf das Gewicht des Prepolymers eingesetzt.

Wasser wird vorzugsweise mit einem Anteil von 0.001 - 1 Gew.-%, bevorzugt 0.02 - 0.35 Gew.-%, besonders bevorzugt 0.04 - 0.6 Gew.-%, bezogen auf das Gewicht des Prepolymers eingesetzt.

Besonders bevorzugt wird das Wasser mit einem Anteil von 0.5 - 10 Gew.-%, bevorzugt 1 - 7 Gew.-%, besonders bevorzugt 2 - 5 Gew.-%, bezogen auf das Gewicht des Polycarboxylats, eingesetzt.

Gemäss einer besonders bevorzugten Ausführungsform werden das Polycarboxylat und das Wasser in Form einer Mischung aus pulverförmigem Polycarboxylat und Wasser eingesetzt. Das Wasser kann hierzu beispielsweise auf das Polycarboxylat aufgesprüht werden. Es genügt aber in den meisten Fällen, das Polycarboxylat, beispielsweise in Pulverform, grossflächig auszubreiten, um eine Wasseraufnahme über Absorption von Luftfeuchtigkeit zu ermöglichen. Im letzteren Fall beträgt die relative Luftfeuchtigkeit bevorzugt zwischen 40 und 60% bei einer Temperatur von 23°C.

In einer weiteren vorteilhaften Ausführungsform enthält Zusammensetzung welche in Schritt a) bereitgestellt wird ein oder mehrere Additive und/oder der Zusammensetzung werden vor, nach und/oder während Schritt b) ein oder mehrere Additive zugesetzt. Bei den Additiven handelt es sich insbesondere um in der Polyurethanindustrie üblicherweise eingesetzte Hilfs- und Zusatzstoffe.

Die Additive werden insbesondere beigemischt. Als Mischvorrichtungen können alle auf diesem Gebiet bekannten Mischvorrichtungen eingesetzt werden.

Insbesondere ist das Additiv ausgewählt aus oligomeren Isocyanaten, Katalysatoren, Füllstoffen, Weichmachern, Pigmente, Fasern, Nanofüllstoffen, Farbstoffe, Trocknungsmittel, Haftvermittler, Rheologie-Modifizierer, Lösemittel, natürliche Harze, Fette oder Öle, nicht-reaktive Polymere, flammhemmende Substanzen, Netzmittel, Verlaufmittel, Entschäumer, Entlüfter, Stabilisatoren gegen Oxidation, gegen Wärme, gegen Licht oder gegen UV-Strahlung, Biozide oder Mischungen davon.

Geeignete oligomere Isocyanate sind insbesondere HDI-Biurete wie Desmodur® N 100 oder N 3200 (von Covestro), Tolonate® HDB oder HDB-LV (von Vencorex) oder Duranate® 24A-100 (von Asahi Kasei); HDI-Isocyanurate wie Desmodur® N 3300, N 3600 oder N 3790 BA (alle von Covestro), Tolonate® HDT, HDT-LV oder HDT-LV2 (von Vencorex), Duranate® TPA-100 oder THA-100 (von Asahi Kasei) oder Coronate® HX (von Nippon Polyurethane); HDI-Uretdione wie Desmodur® N 3400 (von Covestro); HDI-Iminooxadiazindione wie Desmodur® XP 2410 (von Covestro); HDI-Allophanate wie Desmodur® VP LS 2102 (von Covestro); IPDI-Isocyanurate in Lösung, beispielsweise als Desmodur® Z 4470 (von Covestro), oder in fester Form, beispielsweise als Vestanat® T1890/ 100 (von Evonik); TDI-Oligomere wie Desmodur® IL (von Covestro); oder gemischte Isocyanurate auf Basis TDI/HDI wie Desmodur® HL (von Covestro).

Geeignete Katalysatoren sind insbesondere Katalysatoren für die Beschleunigung der Reaktion von Isocyanatgruppen, insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, oder tertiäre Aminogruppen enthaltende Verbindungen wie insbesondere 2,2'-Dimorpholinodiethylether (DMDEE), sowie Amidin- oder Guanidinverbindungen. Geeignet sind insbesondere auch Kombinationen von verschiedenen Katalysatoren.

Dabei sind Katalysatoren für die Beschleunigung der Reaktion von Isocyanatgruppen insbesondere nur in einer solchen Menge vorhanden, dass die Stabilität der ausgehärteten Zusammensetzung nicht über Gebühr beeinträchtigt wird.

Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, Zemente, Gipse, Flugaschen, industriell hergestellte Russe, Graphit, Metall-Pulver, beispielsweise von Aluminium, Kupfer, Eisen, Silber oder Stahl, PVC-Pulver oder Hohlkugeln.

Bevorzugt sind Calciumcarbonate, welche gegebenenfalls mit Fettsäuren, insbesondere Stearaten, beschichtet sind, calcinierte Kaoline oder industriell hergestellte Russe.

Geeignete Weichmacher sind insbesondere Carbonsäureester wie Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat bzw. Diisononyl-1,2-cyclohexandicarboxylat (DINCH), Terephthalate, insbesondere Bis(2-ethylhexyl) terephthalat oder Diisononylterephthalat, hydrierte Terephthalate, insbesondere hydriertes Bis(2-ethylhexyl)terephthalat oder Diisononylterephthalat bzw. Bis(2-ethylhexyl)-1,4-cyclohexandicarboxylat, Trimellitate, Adipate, insbesondere Dioctyladipat, Azelate, Sebacate, Benzoate, Glykolether, Glykolester, organische Phosphor- oder Sulfonsäureester, Polybutene, Polyisobutene oder von natürlichen Fetten oder Ölen abgeleitete Weichmacher, insbesondere epoxidiertes Soja- oder Leinöl.

Vorteilhaft sich auch Additive ausgewählt aus:

- anorganischen oder organischen Pigmenten, insbesondere Titandioxid, Chromoxide oder Eisenoxide;
- Fasern, insbesondere Glasfasern, Kohlefasern, Metallfasern, Keramikfasern, Kunststofffasern wie Polyamidfasern oder Polyethylenfasern, oder Naturfasern wie Wolle, Cellulose, Hanf oder Sisal;
- Nanofüllstoffen wie Graphen oder Carbon Nanotubes;
- Farbstoffen;
- Trocknungsmitteln, insbesondere Molekularsiebpulver, Calciumoxid, hochreaktive Isocyanate wie p-Tosylisocyanat, Mono-Oxazolidine wie Incozol® 2 (von Incorez) oder Orthoameisensäureester;
- Haftvermittler, insbesondere Organoalkoxysilane, insbesondere Epoxysilane wie insbesondere 3-Glycidoxypropyltrimethoxysilan oder 3-Glycidoxypropyltriethoxysilan, (Meth)acrylosilane, Anhydridosilane, Carbamatosilane, Alkylsilane oder Iminosilane, oder oligomere Formen dieser Silane, oder Titanate;
- weitere Katalysatoren, welche die Reaktion der Isocyanatgruppen beschleunigen, insbesondere Salze, Seifen oder Komplexe von Zinn, Zink, Bismut, Eisen, Aluminium, Molybdän, Dioxomolybdän, Titan, Zirkonium oder Kalium, insbesondere Zinn(II)-2-ethylhexanoat, Zinn(II)-neodecanoat, Zink(II)-acetat, Zink(II)-2-ethylhexanoat, Zink(II)-laurat, Zink(II)-acetylacetonat, Aluminiumlactat, Aluminiumoleat, Diisopropoxytitan-bis-(ethylacetoacetat) oder Kaliumacetat; tertiäre Aminogruppen enthaltende Verbindungen, insbesondere N-Ethyldiisopropylamin, N,N,N',N'-Tetramethylalkylendiamine, Pentamethylalkylentriamine und höhere Homologe davon, Bis-(N,N-diethylaminoethyl)-adipat, Tris(3-dimethylaminopropyl)amin, 1,4-Diazabicyclo[2.2.2]octan (DABCO), 1,8-Diazabicyclo[5.4.0]undec-7-en (DBU), 1,5-Diazabicyclo[4.3.0]-non-5-en (DBN), N-Alkylmorpholine, N,N'-Dimethylpiperazin; stickstoffaromatische Verbindungen wie 4-Dimethylaminopyridin, N-Methylimidazol, N-Vinylimidazol oder 1,2-Dimethylimidazol; organische Ammoniumverbindungen wie Benzyltrimethylammoniumhydroxid oder alkoxylierte tertiäre Amine; sogenannte "delayed action"-Katalysatoren, welche Modifizierungen bekannter Metall- oder Aminkatalysatoren darstellen;
- Rheologie-Modifizierer, insbesondere Verdickungsmittel, insbesondere Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether oder hydrophob modifizierte Polyoxyethylene;
- Lösemittel, insbesondere Aceton, Methylacetat, tert. Butylacetat, 1-Methoxy-2-propylacetat, Ethyl-3-ethoxypropionat, Diisopropylether, Diethylenglykoldiethylether, Ethylenglykoldiethylether, Ethylenglykolmonobutylether, Ethylenglykolmono-2-ethylhexylether, Acetale wie Propylal, Butylal, 2-Ethylhexylal, Dioxolan, Glycerolformal oder

2,5,7,10-Tetraoxaundecan (TOU), Toluol, Xylol, Heptan, Octan, Naphtha, White Spirit, Petrolether oder Benzin, insbesondere Solvesso™-Typen (von Exxon), sowie Propylencarbonat, Dimethylcarbonat, Butyrolacton, N-Methylpyrrolidon, N-Ethylpyrrolidon, p-Chlorobenzotrifluorid oder Benzotrifluorid;
- natürliche Harze, Fette oder Öle wie Kolophonium, Schellack, Leinöl, Rizinusöl oder Sojaöl;
- nicht-reaktive Polymere, insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-$\alpha$-Olefine (APAO);
- flammhemmende Substanzen, insbesondere die bereits genannten Füllstoffe Aluminiumhydroxid oder Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)phosphat, isopropyliertes Triphenylphosphat, Mono-, Bis- oder Tris(isopropylphenyl)phosphate unterschiedlichen Isopropylierungsgrades, Resorcinolbis(diphenylphosphat), Bisphenol-A-bis(diphenylphosphat) oder Ammoniumpolyphosphate;
- Netzmittel, Verlaufmittel, Entschäumer, Entlüfter, Stabilisatoren gegen Oxidation, Wärme, Licht oder UV-Strahlung oder Biozide.

Es kann sinnvoll sein, gewisse Additive vor dem Einmischen in die Zusammensetzung chemisch oder physikalisch zu trocknen.
Die Additive können bei Bedarf und je nach Anwendungszweck in geeigneten Mengen in üblicher Weise zugesetzt werden. In der Regel ist es bevorzugt, wenn der Zusammensetzung mindestens ein Weichmacher und/oder mindestens einen Füllstoff zugegeben wird.
Die Anteile der Bestandteile der Zusammensetzung können in weiten Bereichen je nach eingesetzten Bestandteilen und Verwendungszweck variieren. Die nachstehenden Mengenangaben für zweckmäßige und bevorzugte Ausführungsformen beziehen sich auf das Gesamtgewicht der Polyurethan-Zusammensetzung.
Die Zugabe der Additive erfolgt insbesondere nach Schritt b), bevorzugt bei einer Temperatur unterhalb der Temperatur der Umsetzung in Schritt b), wobei, falls ein Katalysator zugegeben, dessen Zugabe im Speziellen vor Schritt b) erfolgt.
In einer bevorzugten Ausführungsform wird der Zusammensetzung vor Schritt b) wenigstens ein Katalysator wie er vorstehend beschrieben ist, insbesondere ein Katalysator für die Beschleunigung der Reaktion von Isocyanatgruppen, zugegeben und optional weitere Additive nach Schritt b) zugegeben.
Im Besonderen wird eine Zusammensetzung mit folgenden Bestandteilen hergestellt:

a) 15 - 70 Gew.-%, bevorzugt 20 - 60 Gew.-%, im Besonderen 25 - 50 Gew.-%, des mindestens einen Prepolymers;

b) 0.3 - 10 Gew.-%; bevorzugt 0.5 - 7 Gew.-%, im Besonderen 1 - 5 Gew.-%, des Polycarboxylats, insbesondere wie vorstehend beschrieben;

c) 0 - 70 Gew.%, bevorzugt 10 - 60 Gew.-%, im Besonderen 20 - 50 Gew.-%, anorganische und/oder organische Füllstoffe, insbesondere wie vorstehend beschrieben;

d) 0 - 30 Gew.-%, bevorzugt 5 - 25 Gew.-%, im Besonderen 15 - 25 Gew.-%, Weichmacher, insbesondere wie vorstehend beschrieben;

e) 0 - 5 Gew.-%, bevorzugt 0.01 - 3 Gew.-%, im Besonderen 0.05 - 2 Gew.-%, wenigstens eines Katalysators;

f) Optional ein oder mehrere zusätzliche Additive, deren Anteile sich auf 100 Gew.-% ergänzen.

Die Anteile sind dabei bezogen auf das Gesamtgewicht der Zusammensetzung.
Ein Gehalt an monomeren Polyisocyanaten, im Speziellen monomeren Dissiocyanaten, beträgt dabei insbesondere höchstens 0.5 Gewichts-%, bevorzugt höchstens 0.3 Gewichts-%, insbesondere höchstens 0.1 Gewichts-%, im Speziellen weniger als 0.1 Gewichts-%, bezogen auf das Gewicht des Prepolymers.
Die Viskosität kann unter Berücksichtigung der beabsichtigen Verwendung beliebig eingestellt werden, z.B. kann die Zusammensetzung pastös sein und bevorzugt strukturviskose Eigenschaften aufweisen.
Solche Zusammensetzungen können als Polyurethan-Zusammensetzungen, für verschiedene Zwecke eingesetzt werden, insbesondere als Kleb- und/oder Dichtstoffe.
Ebenfalls offenbart ist eine Polyurethan-Zusammensetzung erhältlich durch oder erhalten durch das Verfahren

wie es vorstehend beschrieben ist.

Die Polyurethan-Zusammensetzung kann in Form einer einkomponentigen oder in Form einer mehrkomponentigen, insbesondere zweikomponentigen, Zusammensetzung hergestellt werden oder vorliegen. Als "einkomponentig" wird eine Zusammensetzung bezeichnet, bei welcher alle Bestandteile der Zusammensetzung im gleichen Gebinde vorliegen und welche als solche lagerstabil ist. Als "zweikomponentig" wird eine Zusammensetzung bezeichnet, bei welcher die Bestandteile der Zusammensetzung in zwei verschiedenen Komponenten vorliegen, welche in voneinander getrennten Gebinden gelagert und erst kurz vor oder während der Applikation der Zusammensetzung miteinander vermischt werden.

Die Polyurethan-Zusammensetzung wird bevorzugt als einkomponentige Zusammensetzung hergestellt. Sie ist bei geeigneter Verpackung und Aufbewahrung lagerstabil, typischerweise während mehreren Monaten bis zu einem Jahr oder länger.

Ein weiterer Gegenstand der Erfindung ist die Verwendung eines Polycarboxylats in Kombination mit Wasser zur Reduktion des Gehalts an monomeren Polyisocyanaten in einer Zusammensetzung enthaltend (i) ein Prepolymer mit Isocyanat-Endgruppen basierend auf mindestens einem Polyisocyanat und mindestens einem Polyol sowie (ii) wenigstens ein monomeres Polyisocyanat, wobei die Zusammensetzung enthaltend das Prepolymer und das wenigstens eine Polyisocyanat mit dem Polycarboxylat und dem Wasser bei einer Temperatur von mindestens 40°C, bevorzugt 50 90°C, im Besonderen 65 - 80°C, besonders bevorzugt 70 - 75°C, umgesetzt wird, wobei das Polycarboxylat ein Polycarboxylatether ist, bevorzugt ein Kammpolymer, welches über ein Polycarboxylatrückgrat und Polyetherseitenketten verfügt, wobei die Polyetherseitenketten über Ester-, Ether-, Amid- und/oder Imidgruppen an das Polycarboxylatrückgrat gebunden sind.

Die vorstehend im Zusammenhang mit den Verfahren beschriebenen vorteilhaften Ausführungsformen und werden mit Vorteil auch bei der erfindungsgemässen Verwendung realisiert.

Im Folgenden wird die Erfindung durch Beispiele weiter erläutert.

## Beispiele

Im Folgenden sind Ausführungsbeispiele aufgeführt, welche die beschriebene Erfindung näher erläutern sollen.

Die verwendeten Chemikalien wurden, sofern nicht anders bezeichnet, von Sigma-Aldrich (Schweiz) bezogen.

Herstellung von Prepolymeren mit Isocyanat-Endgruppen, enthaltend Reste an nichtreagierten monomeren Diisocyanaten:

### Polyurethan-Prepolymer PU1:

400 g Polyoxypropylen-Diol (Acclaim® 4200, von Covestro AG; OH-Zahl 28.5 mg KOH/g) und 52 g 4,4'-Diphenylmethandiisocyanat (Desmodur® 44 MC L, von Covestro AG) wurden nach bekanntem Verfahren bei 80 °C zu einem bei Raumtemperatur flüssigen, NCO-terminierten Polymer mit einem Isocyanatgruppen-Gehalt von 1.85 Gewichts-%, bezogen auf das Prepolymer, umgesetzt.

### Polyurethan-Prepolymer PU2:

6950 g Polyoxypropylenpolyoxyethylentriol (Caradol® MD34-02, Shell Chemicals Ltd., UK; OH-Zahl 35.0 mg KOH/g), 1145 g 4,4'-Methylendiphenyldiisocyanat (4,4'-MDI; Desmodur® 44 MC L, Bayer MaterialScience AG) und 203 g Diisodecylphthalat (DIDP; Palatinol® Z, BASF SE, Deutschland) wurden nach bekanntem Verfahren bei 80 °C zu einem NCO-terminierten Polyurethanpolymer mit einem Isocyanatgruppen-Gehalt von 2.38 Gewichts-%, bezogen auf das Prepolymer, umgesetzt.

### Polyurethan-Prepolymer PU3:

590 g Polyoxypropylendiol (Acclaim® 4200 N, Bayer MaterialScience AG; OH-Zahl 28.5 mg KOH/g);, 1180 g Polyoxypropylenpolyoxyethylentriol (Caradol® MD34-02, Shell Chemicals Ltd., UK; OH-Zahl 35.0 mg KOH/g) und 230 g Isophorondiisocyanat (IPDI; Vestanat® IPDI, Evonik Degussa AG) wurden nach bekanntem Verfahren bei 80 °C zu einem NCO-terminierten Polyurethanpolymeren mit einem Isocyanatgruppen-Gehalt von 2.1 Gew.-%, bezogen auf das Prepolymer, umgesetzt.

Bereitstellung der Polycarboxylatether/Wasser-Mischung

Ein Polycarboxylatether (entsprechend einem Polymer **P** wie weiter oben beschrieben, wobei die Reste $R^u$ und

$R^v$ in Formeln (I) und (II) für Wasserstoff stehen, r = 0 ist, t = 1 ist, $G^1$ und $G^2$ für -$[A'O]_s$-$G^4$ mit s = 20 - 120 und A' = C2-Alkylen und $G^4$ für eine Methylgruppe stehen) erhältlich unter dem Handelsnamen ViscoCrete®-520 P (von Sika Schweiz) wurde grossflächig in einem Normklimaraum (Temperatur 23°C und 50% relative Luftfeuchte) ausgebreitet und so lange belassen, bis der Wassergehalt des Polycarboxylatethers (absorbiertes Wasser über die Luftfeuchtigkeit) 2.5 Gewichtsprozent, bezogen auf den Polycarboxylatether betrug. Der Wassergehalt wurde über Karl-Fischer Titration bestimmt.

Herstellung von Polyurethan-Zusammensetzungen

Es wurden mit den in Tabelle 1 angegebenen Inhaltsstoffen vier Polyurethan-Zusammensetzungen **C1** - **C4** hergestellt. Die Zusammensetzung **C1** wurde zu Vergleichszwecken hergestellt und ist nicht erfindungsgemäss.

Tabelle 1: Polyurethan-Zusammensetzungen (Zahlen in Gewichtsteilen).

| **Formulierung →** <br> **↓ Inhaltsstoffe** | **C1** | **C2** | **C3** | **C4** |
|---|---|---|---|---|
| Polyurethan-Prepolymer PU1 | 19 | 19 | 19 | 19 |
| Polyurethan-Prepolymer PU2 | 26 | 26 | 26 | 26 |
| Polyurethan-Prepolymer PU3 | 5 | 5 | 5 | 5 |
| Katalysator[1] | 1 | 1 | 1 | 1 |
| Polycarboxylatether/Wasser[2] | 0 | 1 | 2 | 4 |
| Weichmacher[3] | 9.5 | 9.5 | 9.5 | 9.5 |
| Russ[4] | 23 | 23 | 23 | 23 |
| Anorganischer Füller[5] | 14 | 13 | 12 | 10 |
| Haftvermittler[6] | 2.5 | 2.5 | 2.5 | 2.5 |
| TOTAL | 100.0 | 100.0 | 100.0 | 100.0 |

[1] Dibutylzinndiacetat (10 Gew.-% in DIDP)
[2] Mischung aus ViscoCrete®-520 P (von Sika) und 2.5 Gew.-% Wasser
[3] Diisodecylphthalat (DIDP)
[4] Monarch® 570 (von Cabot Corp.)
[5] Omyacarb® 5 GU (von Omya)
[6] Aliphatisches Polyisocyanat (HDI-Trimerisat), Desmodur® N 3300 (von Covestro)

In einem ersten Schritt wurden die Prepolymere PU1 bis PU3 sowie der Katalysator miteinander vermischt und für 10 Minuten mittels eines Plantenmischers gemischt. Sodann wurde die Reaktionsmischung auf eine Temperatur von 65 - 70°C erhitzt und bei den Versuchen **C2** bis **C4** die Mischung aus Polycarboxylatether und Wasser zugegeben und während 30 Minuten gemischt. Anschliessend wurden bei einer Temperatur von 60 - 65°C jeweils der Weichmacher, der Russ und der anorganische Füller zugegeben in bekannter Weise zugegeben. Der Haftvermittler wurde als letzter Bestandteil bei 50 - 55°C beigemischt. Die Zusammensetzungen wurden bis zur Verwendung und der Implementation des Testprotokolls wie weiter unten beschrieben unter Feuchtigkeitsausschluss aufbewahrt.

Eigenschaften der Polyurethan-Zusammensetzungen

Der **Gehalt an monomerem Diisocyanat** der jeweiligen Zusammensetzung wurde mittels HPLC (Detektion über Photodiodenarray; 0.04 M Natriumacetat / Acetonitril als mobile Phase) nach vorgäniger Derivation mittels N-Propyl-4-nitrobenzylamin bestimmt.

Die Eigenschaften **Zugfestigkeit, Dehnung** und **E-Modul 0.5-5%** wurden gemäss DIN EN ISO 527 an Proben nach 7 Tagen bei Raumtemperatur bestimmt.

Die **Hautbildungszeit** (Zeit bis zur Klebefreiheit, "tack-free time") als Mass für die Aushärtegeschwindigkeit wurde bei 23°C ("RT") und 50% relativer Luftfeuchtigkeit bestimmt. Zur Bestimmung der Hautbildungszeit wurde ein kleiner Teil der raumtemperaturwarmen Beschichtungsmasse in einer Schichtdicke von ca. 2 mm auf Pappkarton aufgetragen und die Zeit bestimmt, die es dauerte, bis beim leichten Antippen der Oberfläche der Beschichtungsmasse mittels einer Pipette aus LDPE erstmals keine Rückstände auf der Pipette mehr zurückblieben.

Tabelle 2: Eigenschaften der Polyurethan-Zusammensetzungen.

| **Formulierung →** | **C1** | **C2** | **C3** | **C4** |
|---|---|---|---|---|
| **↓ Eigenschaft** | | | | |
| Monomerengehalt [Gew.-%][1]<br>- 2,4-MDI<br>- 4,4-MDI<br>- IPDI | <br>0.02<br>0.65<br>0.06 | <br>0.01<br>0.39<br>0.06 | <br>< 0.01<br>0.21<br>0.06 | <br>n.b.<br>< 0.01<br>0.04 |
| Zugfestigkeit [MPa] | 9.2 | 8.1 | 7.5 | 7.4 |
| Bruchdehnung [%] | 463 | 402 | 389 | 320 |
| E-Modul 0.5-5% [MPa] | 4.5 | 4.3 | 3.8 | 2.9 |
| Hautbildungszeit [min] | 42 | 48 | 67 | 53 |
| [1] bezogen auf die jeweilige Formulierung. «n.b.» = nicht bestimmbar | | | | |

Die Daten in Tabelle 2 zeigen, dass der Gehalt an monomerem Polyisocyanat durch Umsetzung mit Polycarboxylat/Wasser (Formulierungen **C2** - **C4)** im Vergleich mit der Referenzformulierung **C1** deutlich reduziert werden kann. Dies insbesondere im Fall von MDI. Es können bei geeigneter Menge an Polycarboxylat/Wasser für alle Monomere Werte deutlich unterhalb 0.1 Gew.-% erreicht werden (Formulierung **C4).** Dies zudem ohne dass die mechanischen Eigenschaften oder die Hautbildungszeiten über Gebühr beeinträchtigt werden.

Es sei noch angemerkt, dass 2,4-MDI als Verunreinigung im bei der Herstellung der Polymere PU1 und PU2 verwendeten 4,4-MDI typischerweise vorhanden ist.

Versuche mit getrennter Zugabe von Wasser und Polycarboxylat

Es wurden weitere Versuche mit getrennter Zugabe von Polycarboxylat und Wasser durchgeführt, sowie ein Vergleichsversuch ohne Polycarboxylat.

Versuch **C5**

Dieser Versuch wurde mit denselben Rohstoffen und nach demselben Verfahren wie Versuch **C2** durchgeführt, mit dem Unterschied, dass anstatt von 1 Gewichtsteil Polycarboxylatether/Wasser-Gemisch (wie in **C2**) zunächst 2.5 Gewichtsteile reiner Polycarboxylatether ViscoCrete®-520 P (von Sika Schweiz; eingesetzt wie käuflich erworben) zugegeben wurden und innert einer Minute 0.55 Gewichtsteile Wasser mit einer Pipette zugegeben wurden. Das restliche Herstellverfahren entsprach dann genau der Vorschrift zu **C2**.

Die Prüfung des Restgehaltes an monomeren Diisocyanaten von Versuch **C5** nach oben beschriebenem Verfahren wie es für die Versuche **C1** bis **C4** durchgeführt wurde ergab für **C5** einen Gehalt von < 0.01 Gew.-% 2,4-MDI, 0.07 Gew.-% 4,4-MDI, sowie 0.07 Gew.-% IPDI. Die mechanischen Daten wurden nicht geprüft. Versuch **C5** zeigt jedoch, dass das Polycarboxylat und das Wasser nicht gleichzeitig (oder in Form einer Mischung) zugegeben werden müssen, sondern dass auch Polycarboxylat in handelsüblicher, nicht aufbereiteter Form zugegeben werden kann, und das Wasser anschliessend in freier Form zugegeben werden kann, um das erfindungsgemässe Verfahren durchzuführen.

Versuch **C6** (nicht erfindungsgemäss)

Dieser Versuch wurde wie Versuch **C5** durchgeführt, mit dem Unterschied, dass kein Polycarboxylat, sondern lediglich 0.55 Gewichtsteile Wasser zugegeben wurden.

Nach Zugabe des Wassers fing die Reaktionsmischung bei der Zubereitung von **C6** an zu reagieren und eine deutliche, immer stärker werdende Verdickung wurde beobachtet. Der Versuch musste schliesslich vor Ablauf der 30 Minuten Rührzeit abgebrochen werden, da die Mischung komplett auszuhärten begann. Der Restmonomergehalt konnte nicht bestimmt werden. Versuch **C6** zeigt also, dass Polycarboxylat zwingend anwesend sein muss, um die erfindungsgemässe Wirkung zu ermöglichen. Eine reine Zugabe von Wasser führt nicht zu einer Reduktion vom Monomergehalt, sondern lediglich zu einer unkontrollierten Aushärtung der Mischung.

Die vorstehenden Ausführungsbeispiele sind jedoch lediglich als illustrative Beispiele zu verstehen, welche im Rahmen der Erfindung beliebig abgewandelt werden können.

## Patentansprüche

**1.** Verfahren zur Reduktion des Gehalts an monomeren Polyisocyanaten in einer Zusammensetzung enthaltend (i) mindestens ein Prepolymer mit Isocyanat-Endgruppen basierend auf mindestens einem Polyisocyanat und mindestens einem Polyol sowie (ii) wenigstens ein monomeres Polyisocyanat, wobei das Verfahren die folgenden Schritte umfasst:

a) Bereitstellen der Zusammensetzung enthaltend das Prepolymer und das wenigstens eine monomere Polyisocyanat;
b) Umsetzen der Zusammensetzung mit einem Polycarboxylat und Wasser bei einer Temperatur von mindestens 40°C, bevorzugt 50 - 90°C, im Besonderen 60 - 80°C, besonders bevorzugt 65 - 75°C, so dass der Gehalt an monomerem Polyisocyanat in der Zusammensetzung reduziert wird,

**dadurch gekennzeichnet, dass** das Polycarboxylat ein Polycarboxylatether ist, bevorzugt ein Kammpolymer, welches über ein Polycarboxylatrückgrat und Polyetherseitenketten verfügt, wobei die Polyetherseitenketten über Ester-, Ether-, Amid- und/oder Imidgruppen an das Polycarboxylatrückgrat gebunden sind.

**2.** Verfahren nach Anspruch 1, wobei in Schritt a) zur Bereitstellung der Zusammensetzung mindestens ein monomeres Polyisocyanat und mindestens ein Polyol zu dem Prepolymer mit Isocyanat-Endgruppen umgesetzt werden, wobei Reste des monomeren Polyisocyanats unreagiert in der Reaktionsmischung verbleiben.

**3.** Verfahren nach wenigstens einem der Ansprüche 1 - 2, wobei die Umsetzung in Schritt b) derart durchgeführt wird, dass ein Gehalt an monomeren Polyisocyanaten, im Speziellen monomeren Diisocyanaten, von höchstens 0.5 Gewichts-%, bevorzugt höchstens 0.3 Gewichts-%, insbesondere höchstens 0.1 Gewichts-%, im Speziellen weniger als 0.1 Gewichts-%, bezogen auf die Zusammensetzung resultiert.

**4.** Verfahren nach wenigstens einem der Ansprüche 1 - 3, wobei die Zusammensetzung in Schritt b) während mindestens 5 min, bevorzugt 10 - 120 min, im Besonderen 15 - 60 min, umgesetzt wird.

**5.** Verfahren nach wenigstens einem der Ansprüche 1 - 4, wobei das Polycarboxylat ein Polmyer P ist, welches folgende Teilstruktureinheiten aufweist oder daraus besteht:

a) a Molanteile einer Teilstruktureinheit **S1** der Formel I

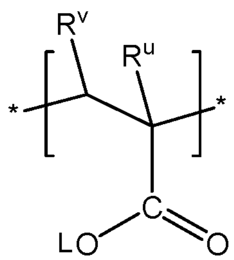

(I)

b) b Molanteile einer Teilstruktureinheit **S2** der Formel II

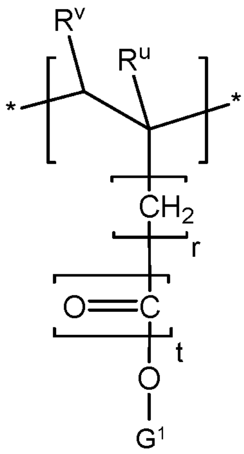

(II)

c) c Molanteile einer Teilstruktureinheit **S3** der Formel (III)

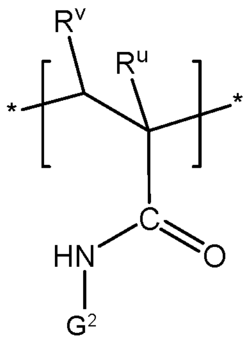

(III)

d) d Molanteile einer Teilstruktureinheit **S4** der Formel (IV)

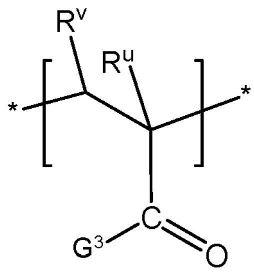

(IV)

wobei

L unabhängig voneinander $H^+$, ein Alkalimetallion, Erdalkalimetallion, ein zwei oder dreiwertiges Metallion, ein Ammoniumion oder eine organische Ammoniumgruppe darstellt,
jedes $R^u$ unabhängig von den anderen für Wasserstoff oder eine Methylgruppe steht,
jedes $R^v$ unabhängig von den anderen für Wasserstoff oder COOM steht,

$$r = 0, 1 \text{ oder } 2,$$

$$t = 0 \text{ oder } 1,$$

$G^1$ und $G^2$ unabhängig voneinander für eine $C_1$- bis $C_{20}$-Alkylgruppe, -Cycloalkylgruppe, -Alkylarylgruppe oder für -$[A'O]_s$-$G^4$ steht, wobei A' = $C_2$- bis $C_4$-Alkylen, $G^4$ für H, eine $C_1$- bis $C_{20}$-Alkylgruppe, -Cycloalkylgruppe oder -Alkylarylgruppe steht, und s = 2 - 250,
$G^3$ unabhängig voneinander für $NH_2$, -$NG^5G^6$, -$OG^7NG^8G^9$ stehen, wobei $G^5$ und $G^6$ unabhängig voneinander für eine $C_1$- bis $C_{20}$-Alkylgruppe, -Cycloalkylgruppe -Alkylarylgruppe oder -Arylgruppe stehen, oder

für eine Hydroxyalkylgruppe oder für eine Acetoxyethyl- ($CH_3$-CO-O-$CH_2$-$CH_2$-) oder eine Hydroxyisopropyl- (HO-CH($CH_3$)-$CH_2$-) oder eine Acetoxyisopropylgruppe ($CH_3$-CO-O-CH($CH_3$)-$CH_2$-) stehen;

oder $G^5$ und $G^6$ bilden zusammen einen Ring, von dem der Stickstoff ein Teil ist, um einen Morpholin- oder Imidazolinring aufzubauen;
$G^7$ eine $C_2$ -$C_4$-Alkylengruppe ist,
$G^8$ und $G^9$ je unabhängig voneinander eine $C_1$- bis $C_{20}$-Alkylgruppe, -Cycloalkylgruppe, -Alkylarylgruppe, -Arylgruppe oder eine Hydroxyalkylgruppe darstellen,

und wobei a, b, c und d Molanteile der jeweiligen Teilstruktureinheiten **S1, S2, S3** und **S4** darstellen, mit

$$a/b/c/d = (0.1 - 0.9) / (0.1 - 0.9) / (0 - 0.8) / (0 - 0.8),$$

insbesondere

$$a/b/c/d = (0.3 - 0.9) / (0.1 - 0.7) / (0 - 0.6) / (0 - 0.4),$$

bevorzugt

$$a/b/c/d = (0.5 - 0.8) / (0.2 - 0.4) / (0.001 - 0.005) / 0$$

und mit der Massgabe dass

$$a + b + c + d = 1 \text{ ist.}$$

**6.** Verfahren nach wenigstens einem der Ansprüche 1 - 5, wobei das Polycarboxylat mit einem Anteil von 0.5 - 20 Gew.-%, bevorzugt 1 - 15 Gew.-%, insbesondere 2 - 12 Gew-%, bezogen auf das Gewicht der des Prepolymers eingesetzt wird.

**7.** Verfahren nach wenigstens einem der Ansprüche 1 - 6, wobei das Wasser mit einem Anteil von 0.001 - 1 Gew.-%, bevorzugt 0.02 - 0.35 Gew.-%, besonders bevorzugt 0.04 - 0.6 Gew.-%, bezogen auf das Gewicht des Prepolymers eingesetzt wird.

**8.** Verfahren nach wenigstens einem der Ansprüche 1 - 7, wobei das Wasser mit einem Anteil von 0.5 - 10 Gew.-%, bevorzugt 1 - 7 Gew.-%, besonders bevorzugt 2 - 5 Gew.-%, bezogen auf das Gewicht des Polycarboxylats, eingesetzt wird.

**9.** Verfahren nach wenigstens einem der Ansprüche 1 - 8, wobei das Polyisocyanat ein Diphenylmethandiisocyanat (MDI) umfasst, bevorzugt ein 4,4'-Diphenylmethandiisocyanat, gegebenenfalls mit Anteilen von 2,4'- und/oder 2,2'-Diphenylmethandiisocyanat.

**10.** Verfahren nach wenigstens einem der Ansprüche 1 - 9, wobei der Zusammensetzung ein oder mehrere Additive zugesetzt werden, welche ausgewählt sind aus oligomeren Isocyanaten, Katalysatoren, Füllstoffen, Weichmachern, Pigmente, Fasern, Nanofüllstoffen, Farbstoffe, Trocknungsmittel, Haftvermittler, Rheologie-Modifizierer, Lösemittel, natürliche Harze, Fette oder Öle, nicht-reaktive Polymere, flammhemmende Substanzen, Netzmittel, Verlaufmittel, Entschäumer, Entlüfter, Stabilisatoren gegen Oxidation, gegen Wärme, gegen Licht oder gegen UV-Strahlung, Biozide oder Mischungen davon.

**11.** Verfahren nach Anspruch 10, wobei vor Schritt b) wenigstens ein Katalysator für die Beschleunigung der Reaktion von Isocyanatgruppen zugegeben wird.

**12.** Verwendung eines Polycarboxylats in Kombination mit Wasser zur Reduktion des Gehalts an monomeren Polyisocyanaten in einer Zusammensetzung enthaltend (i) ein Prepolymer mit Isocyanat-Endgruppen basierend auf mindestens einem Polyisocyanat und mindestens einem Polyol sowie (ii) wenigstens ein monomeres Polyisocyanat, wobei die Zusammensetzung enthaltend das Prepolymer und das wenigstens eine Polyisocyanat mit dem Polycarboxylat und dem Wasser bei einer Temperatur von mindestens 40°C, bevorzugt 50 - 90°C, im Besonderen 60 -

80°C, besonders bevorzugt 65 - 75°C, umgesetzt wird, wobei das Polycarboxylat ein Polycarboxylatether ist, bevorzugt ein Kammpolymer, welches über ein Polycarboxylatrückgrat und Polyetherseitenketten verfügt, wobei die Polyetherseitenketten über Ester-, Ether-, Amid- und/oder Imidgruppen an das Polycarboxylatrückgrat gebunden sind.

## Claims

1. Method of reducing the content of monomeric polyisocyanates in a composition comprising (i) at least one prepolymer having isocyanate end groups based on at least one polyisocyanate and at least one polyol, and (ii) at least one monomeric polyisocyanate, wherein the method comprises the following steps:

    a) providing the composition comprising the prepolymer and the at least one monomeric polyisocyanate;
    b) reacting the composition with a polycarboxylate and water at a temperature of at least 40°C, preferably 50-90°C, in particular 60-80°C, more preferably 65-75°C, such that the content of monomeric polyisocyanate in the composition is reduced,

    **characterized in that** the polycarboxylate is a polycarboxylate ether, preferably a comb polymer having a polycarboxylate backbone and polyether side chains, wherein the polyether side chains are bonded to the polycarboxylate backbone via ester, ether, amide and/or imide groups.

2. Method according to Claim 1, wherein the composition is provided in step a) by reacting at least one monomeric polyisocyanate and at least one polyol to give the prepolymer having isocyanate end groups, leaving residues of the monomeric polyisocyanate unreacted in the reaction mixture.

3. Method according to at least one of Claims 1-2, wherein the reaction in step b) is conducted in such a way as to result in a content of monomeric polyisocyanates, specifically monomeric diisocyanates, of not more than 0.5% by weight, preferably not more than 0.3% by weight, especially not more than 0.1% by weight, specifically less than 0.1% by weight, based on the composition.

4. Method according to at least one of Claims 1-3, wherein the composition is reacted in step b) for at least 5 min, preferably 10-120 min, in particular 15-60 min.

5. Method according to at least one of Claims 1-4, wherein the polycarboxylate is a polymer P having or consisting of the following component structural units:

    a) a molar proportions of a component structural unit S1 of the formula I

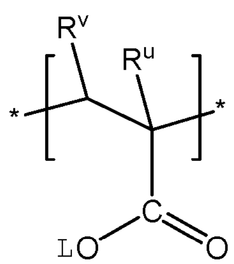

(I)

    b) b molar proportions of a component structural unit S2 of the formula II

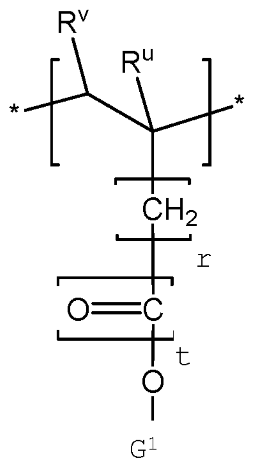

(II)

c) c molar proportions of a component structural unit S3 of the formula (III)

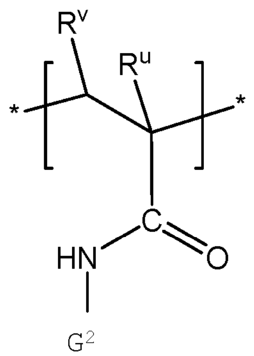

(III)

d) d molar proportions of a component structural unit S4 of the formula (IV)

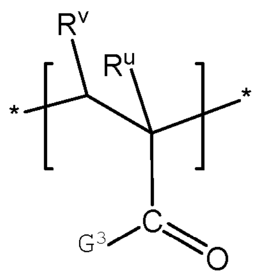

(IV)

where

L independently represents $H^+$, an alkali metal ion, alkaline earth metal ion, a di- or trivalent metal ion, an ammonium ion or an organic ammonium group,
each $R^u$ independently of the others is hydrogen or a methyl group,
each $R^v$ independently of the others is hydrogen or COOM,

$$r = 0, 1 \text{ or } 2,$$

$$t = 0 \text{ or } 1,$$

$G^1$ and $G^2$ are independently a $C_1$- to $C_{20}$-alkyl group, - cycloalkyl group, -alkylaryl group or $-[A'O]_s-G^4$, where A' = $C_2$- to $C_4$-alkylene, $G^4$ is H, a $C_1$- to $C_{20}$-alkyl group, -cycloalkyl group or -alkylaryl group, and s = 2 - 250,
$G^3$ are independently $NH_2$, $-NG^5G^6$, $-OG^7NG^8G^9$, where
$G^5$ and $G^6$ are independently

a $C_1$- to $C_{20}$-alkyl group, -cycloalkyl group, -alkylaryl group or -aryl group, or is a hydroxyalkyl group or is an acetoxyethyl ($CH_3$-COO-$CH_2$-$CH_2$-) or a hydroxyisopropyl (HO-CH($CH_3$)-$CH_2$-) or an acetoxyisopropyl group ($CH_3$-CO-O-CH($CH_3$)-$CH_2$-);
or $G^5$ and $G^6$ together form a ring of which the nitrogen is part, in order to form a morpholine or imidazoline ring;
$G^7$ is a $C_2$-$C_4$-alkylene group,
$G^8$ and $G^9$ are each independently a $C_1$- to $C_{20}$-alkyl group, -cycloalkyl group, -alkylaryl group, -aryl group or a hydroxyalkyl group,
and where a, b, c and d represent molar proportions of the respective component structural units S1, S2, S3 and S4, with

a/b/c/d = (0.1 - 0.9) / (0.1 - 0.9) / (0 - 0.8) / (0 - 0.8),

especially a/b/c/d = (0.3 - 0.9) / (0.1 - 0.7) / (0 - 0.6) / (0 - 0.4),

preferably a/b/c/d = (0.5 - 0.8) / (0.2 - 0.4) / (0.001 - 0.005) / 0,

and with the proviso that

$$a + b + c + d = 1.$$

6. Method according to at least one of Claims 1-5, wherein the polycarboxylate is used in a proportion of 0.5-20% by weight, preferably 1-15% by weight, especially 2-12% by weight, based on the weight of the prepolymer.

7. Method according to at least one of Claims 1-6, wherein the water is used in a proportion of 0.001-1% by weight, preferably 0.02-0.35% by weight, more preferably 0.04-0.6% by weight, based on the weight of the prepolymer.

8. Method according to at least one of Claims 1-7, wherein the water is used in a proportion of 0.5-10% by weight, preferably 1-7% by weight, more preferably 2-5% by weight, based on the weight of the polycarboxylate.

9. Method according to at least one of Claims 1-8, wherein the polyisocyanate comprises a diphenylmethane diisocyanate (MDI), preferably a diphenylmethane 4,4'-diisocyanate, optionally with fractions of diphenylmethane 2,4'- and/or 2,2'-diisocyanate.

10. Method according to at least one of Claims 1-9, wherein one or more additives that are added to the composition are selected from oligomeric isocyanates, catalysts, fillers, plasticizers, pigments, fibres, nanofillers, dyes, desiccants, adhesion promoters, rheology modifiers, solvents, natural resins, fats or oils, non-reactive polymers, flame-retardant substances, wetting agents, levelling agents, defoamers, deaerating agents, stabilizers against oxidation, against heat, against light or against UV radiation, biocides or mixtures thereof.

11. Method according to Claim 10, wherein at least one catalyst for the acceleration of the reaction of isocyanate groups is added prior to step b).

12. Use of a polycarboxylate in combination with water for reduction in the content of monomeric polyisocyanates in a composition comprising (i) a prepolymer having isocyanate end groups based on at least one polyisocyanate and at least one polyol, and (ii) at least one monomeric polyisocyanate, wherein the composition comprising the prepolymer and the at least one polyisocyanate is reacted with the polycarboxylate and the water at a temperature of at least 40°C, preferably 50-90°C, in particular 60-80°C, more preferably 65-75°C, wherein the polycarboxylate is a polycarboxylate ether, preferably a comb polymer having a polycarboxylate backbone and polyether side chains, wherein the polyether side chains are bonded to the polycarboxylate backbone via ester, ether, amide and/or imide groups.

## Revendications

1. Procédé de réduction de la teneur en polyisocyanates monomères dans une composition contenant (i) au moins un prépolymère comportant des groupes terminaux isocyanate à base d'au moins un polyisocyanate et d'au moins un

polyol ainsi que (ii) au moins un polyisocyanate monomère, le procédé comprenant les étapes suivantes :

a) fournir la composition contenant le prépolymère et l'au moins un polyisocyanate monomère ;
b) faire réagir la composition avec un polycarboxylate et de l'eau à une température d'au moins 40°C, préférablement de 50 à 90°C, en particulier de 60 à 80°C, particulièrement préférablement de 65 à 75°C, de façon à réduire la teneur en polyisocyanate monomère dans la composition,

**caractérisé en ce que** le polycarboxylate est un éther de polycarboxylate, préférablement un polymère en peigne qui dispose d'un squelette de polycarboxylate et de chaînes latérales de polyéther, les chaînes latérales de polyéther étant liées au squelette de polycarboxylate par des groupes ester, éther, amide et/ou imide.

**2.** Procédé selon la revendication 1, dans lequel, dans l'étape a), pour fournir la composition, on fait réagir au moins un polyisocyanate monomère et au moins un polyol avec des groupes terminaux isocyanate pour obtenir le prépolymère, des radicaux du polyisocyanate monomère n'ayant pas réagis demeurant dans le mélange réactionnel.

**3.** Procédé selon au moins l'une des revendications 1 à 2, dans lequel la réaction dans l'étape b) est effectuée de telle sorte qu'il en résulte une teneur en polyisocyanates monomères, en particulier en diisocyanates monomères, d'au plus 0,5 % en poids, préférablement d'au plus 0,3 % en poids, en particulier d'au plus 0,1 % en poids, en particulier de moins de 0,1 % en poids, par rapport à la composition.

**4.** Procédé selon au moins l'une des revendications 1 à 3, dans lequel la composition dans l'étape b) est mise à réagir pendant au moins 5 min, préférablement 10 à 120 min, en particulier 15 à 60 min.

**5.** Procédé selon au moins l'une des revendications 1 à 4, dans lequel le polycarboxylate est un polymère P qui présente les motifs de structure partielle suivants ou qui en est constitué :

a) a Fractions molaires d'un motif de structure partielle S1 de formule (I)

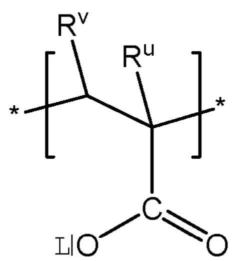

(I)

b) b Fractions molaires d'un motif de structure partielle S2 de formule (II)

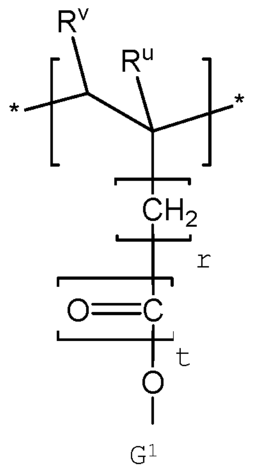

(II)

c) c Fractions molaires d'un motif de structure partielle S3 de formule (III)

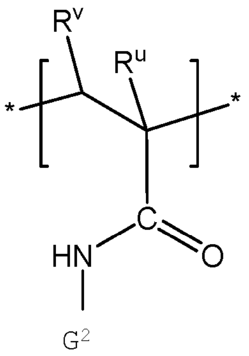

(III)

d) d Fractions molaires d'un motif de structure partielle S4 de formule (IV)

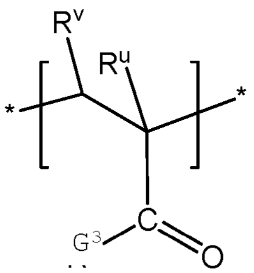

(IV)

dans lesquelles

L représente, indépendamment, $H^+$, un ion de métal alcalin, un ion de métal alcalino-terreux, un ion métallique divalent ou trivalent, un ion ammonium ou un groupe ammonium organique ;
chaque $R^u$ représente, indépendamment les uns des autres, hydrogène ou un groupe méthyle,
chaque $R^u$ représente, indépendamment les uns des autres, hydrogène ou COOM,

$$r = 0, 1 \text{ ou } 2,$$

$$t = 0 \text{ ou } 1,$$

$G^1$ et $G^2$ représentent, indépendamment l'un de l'autre, un groupe alkyle en $C_1$-$C_{20}$, un groupe cycloalkyle, un groupe alkylaryle ou -$[A'O]_s$-$G^4$,
dans lequel A' = alkylène en $C_2$-$C_4$, $G^4$ représente H, un groupe alkyle en $C_1$-$C_{20}$, un groupe cycloalkyle ou un groupe alkylaryle,
et

$$s = 2 \text{ à } 250,$$

$G^3$ représente, indépendamment, $NH_2$, -$NG^5G^6$, -$OG^7NG^8G^9$, $G^5$ et $G^6$ représentant, indépendamment l'un de l'autre,
un groupe alkyle en $C_1$-$C_{20}$, un groupe cycloalkyle
un groupe alkylaryle ou un groupe aryle,
ou représentant un groupe hydroxyalkyle ou un groupe acétoxyéthyle ($CH_3$-CO-O-$CH_2$-$CH_2$-) ou un groupe hydroxy-isopropyle (HO-CH($CH_3$)-$CH_2$-) ou un groupe acétoxy-isopropyle ($CH_3$-CO-O-CH($CH_3$)-$CH_2$-) ;
ou $G^5$ et $G^6$ forment ensemble un cycle dont l'azote est une partie, pour construire un cycle morpholine ou imidazoline ;
$G^7$ est un groupe alkylène en $C_2$-$C_4$,
$G^8$ et $G^9$ représentent, indépendamment l'un de l'autre, un groupe alkyle en $C_1$-$C_{20}$, un groupe cycloalkyle, un groupe alkylaryle,
un groupe aryle ou un groupe hydroxyalkyle,
et a, b, c et d représentent des fractions molaires des motifs constitutifs S1, S2, S3 et S4 respectifs,

a/b/c/d = (0,1 à 0,9) / (0,1 à 0,9) / (0 à 0,8) / (0 à 0,8),

en particulier a/b/c/d = (0,3 à 0,9) / (0,1 à 0,7) / (0 à 0,6) / (0 à 0,4),

préférablement a/b/c/d = (0,5 à 0,8) / (0,2 à 0,4) / (0,001 à 0,005) / 0

et à condition que

$$a + b + c + d = 1.$$

**6.** Procédé selon au moins l'une des revendications 1 à 5, dans lequel le polycarboxylate est utilisé en une quantité de 0,5 à 20 % en poids, préférablement de 1 à 15 % en poids, en particulier de 2 à 12 % en poids, par rapport au poids du prépolymère.

**7.** Procédé selon au moins l'une des revendications 1 à 6, dans lequel l'eau est utilisée en une quantité de 0,001 à 1 % en poids, préférablement de 0,02 à 0,35 % en poids, particulièrement préférablement de 0,04 à 0,6 % en poids, par rapport au poids du prépolymère.

**8.** Procédé selon au moins l'une des revendications 1 à 7, dans lequel l'eau est utilisée en une quantité de 0,5 à 10 % en poids, préférablement de 1 à 7 % en poids, particulièrement préférablement de 2 à 5 % en poids, par rapport au poids du polycarboxylate.

**9.** Procédé selon au moins l'une des revendications 1 à 8, le polyisocyanate comprenant un diisocyanate de diphénylméthane (MDI), préférablement un 4,4'-diisocyanate de diphénylméthane, le cas échéant avec des parties de 2,4'-diisocyanate de diphénylméthane et/ou de 2,2'-diisocyanate de diphénylméthane.

**10.** Procédé selon au moins l'une des revendications 1 à 9, dans lequel on ajoute à la composition un ou plusieurs additifs choisis parmi les isocyanates oligomères, les catalyseurs, les charges, les plastifiants, les pigments, les fibres, les nanocharges, les colorants, les siccatifs, les promoteurs d'adhérence, les modificateurs de rhéologie, les solvants, les résines naturelles, les graisses ou les huiles, les polymères non réactifs, les substances ignifuges, les agents mouillants, les agents de nivellement, les agents antimousse, les désaérateurs, les stabilisateurs contre l'oxydation, contre la chaleur, contre la lumière ou contre un rayonnement UV, les biocides ou des mélanges de ceux-ci.

**11.** Procédé selon la revendication 10, dans lequel, avant l'étape b), on ajoute au moins un catalyseur pour accélérer la réaction des groupes isocyanate.

**12.** Utilisation d'un polycarboxylate en combinaison avec de l'eau pour réduire la teneur en polyisocyanates monomères dans une composition contenant (i) un prépolymère comportant des groupes terminaux polymères à base d'au moins un polyisocyanate et d'au moins un polyol et (ii) au moins un polyisocyanate monomère, la composition contenant le prépolymère et l'au moins un polyisocyanate étant mise à réagir avec le polycarboxylate et l'eau à une température d'au moins 40°C, préférablement de 50 à 90°C, en particulier de 60 à 80°C, particulièrement préférablement de 65 à 75°C, le polycarboxylate étant un éther de polycarboxylate, préférablement un polymère en peigne, qui dispose d'un squelette de polycarboxylate et de chaînes latérales de polyéther, les chaînes latérales de polyéther étant liées au squelette de polycarboxylate par des groupes ester, éther, amide et/ou imide.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2439219 A
- EP 1975186 A
- EP 1138697 B1
- EP 1061089 B1
- EP 1348729 A1